# FASCICULE DE BREVET EUROPEEN

(11) **EP 1 116 179 B1**
(45) Date de publication et mention de la délivrance du brevet: **28.07.2004**
(21) Numéro de dépôt: 99943021.8
(22) Date de dépôt: 22.09.1999
(51) Int. Cl.: G06K 19/077, G06K 19/073

(54) **CARTE A PUCE SANS CONTACT COMPORTANT DES MOYENS D'INHIBITION**
KONTAKTLOSE CHIPKARTE MIT HEMMUNGSMITTELN
CONTACTLESS CARD COMPRISING INHIBITING MEANS

(30) Priorité: 02.10.1998 FR 9812386
(43) Date de publication de la demande: 18.07.2001
(73) Titulaire: Gemplus, 13881 Gémenos Cedex (FR)
(72) Inventeur: FIDALGO, Jean-Christophe, F-13420 Gémenos (FR); BRUNET, Olivier, F-13012 Marseille (FR); FREEMAN, Ray, Mesa, Arizona 85213 (US); PATRICE, Philippe, F-13190 Allauch (FR)
(74) Mandataire: Scheer, Luc
(86) Numéro de dépôt international: PCT/FR1999/002246
(87) Numéro de publication internationale: WO 2000/021029

(56) Documents cités:
- EP-A- 0 689 163
- EP-A- 0 901 101
- WO-A-99/31625
- DE-A- 19 530 608

## Description

L'invention concerne une carte à puce comportant des moyens d'inhibition.

L'invention se rapporte plus particulièrement à une carte à puce sans contact comportant un corps de carte, une antenne et, connectée aux bornes de connexion de ladite antenne, une puce en circuit intégré. De telles cartes sont destinées à la réalisation de diverses opérations de débit dans les véhicules de transport en commun, bancaires, des communications téléphoniques ou opérations d'identification. Ces opérations s'effectuent grâce à un couplage électromagnétique entre la carte et un appareil récepteur ou lecteur. Le couplage peut être réalisé en mode lecture ou en mode lecture/écriture.

Dans une application de paiement d'un service, au moins une unité de valeur est décrémentée dans un stock initial d'unités de valeur chargé dans la mémoire de la carte à puce.

Avec une carte à puce sans contact, l'enveloppe de cellophane ne peut pas empêcher les échanges d'informations à distance entre la carte et un lecteur. L'enveloppe scellée ne peut plus garantir la non utilisation préalable de la carte.

L'invention a donc pour but de proposer une des moyens d'inhibition permettant d'empêcher toute utilisation sans contact frauduleuse de la carte première utilisation.

A cet effet, l'invention a pour objet une carte à puce sans contact selon les revendications.

Le document EP0689163 décrit une carte à mémoire avec un nombre indiqué d'unités consommables, et un bornier de contact. Au moins une partie du bomier de contact est couverte d'une couche de matériau pelable, qui est appliquée avant que la carte soit livrée aux points de vente. Ce matériau pelable doit être enlevé pour permettre la lecture par contact de la carte. Ce document ne propose pas de moyens permettant d'inhiber une interface de communication sans contact.

Le document DE19530608N décrit une carte avec un composant semi conducteur incorporé à son corps en plastique. Un bomier de contact est couvert par une couche protectrice holographique. Pour que la carte puisse être employée, l'hologramme doit être enlevé. Une fois qu'enlevé, l'hologramme est endommagé de façon visible. Ce document ne propose pas de moyens permettant d'inhiber une interface de communication sans contact.

Le document WO9931625 (459) indique qu'il a déjà été proposé de prévoir une étiquette de garantie constituée par un dépôt de matière qui masque l'interface de la carte à puce (antenne ou contacts électriques) et qui peut être éliminée par grattage. Cette opération de grattage n'est pas toujours facile ni très rapide. Par ailleurs, le grattage risque d'endommager le module. Enfin des résidus de grattage peuvent gêner le fonctionnement des lecteurs-récepteurs. Ce document ne décrit pas les spécificités dont les vias creusés, qui permettent à l'invention d'assurer notamment des inhibitions efficaces, libération d'interface effective et préservation possible d'une surface principale du corps de carte.

Le document EP0901101 décrit une carte sans contact avec un circuit de court-circuitage. Le circuit peut être ouvert en retirant une partie d'identification poinçonnée qui forme tout l'embout d'une partie principale d'un corps de carte.

Citons aussi le document EP0599079 qui prévoit une carte à contacts comprenant une portion séparable du corps dont la rupture permet l'insertion de la carte dans un lecteur.

Le document DE4205556 décrit une carte sans contact comportant un interrupteur permettant de relier un condensateur en parallèle sur l'antenne de la carte. La mise en parallèle du condensateur avec l'antenne empêche la carte de communiquer avec l'extérieur. L'inconvénient de cette solution est qu'elle ne permet pas de garantir à un utilisateur que la carte qu'il vient d'acquérir n'a jamais été utilisée auparavant.

Le document EP0899683 décrit une carte sans contact dont l'état de fonctionnement possible / impossible est rendu visible par une portion séparable en coin apte à court-circuiter la bobine.

Le document US5313052 NIPPODENSO prévoit un poinçonnage pour désactiver l'inhibition de l'antenne.

D'autres particularités de l'invention apparaitront dans la description d'exemples en référence aux figures annexées.
- la figure 1, une vue de dessus d'une carte à puce sans contact selon un premier mode de réalisation de l'invention,
- la figure 2, une vue de dessous d'un module électronique double face utilisé dans la carte à puce sans contact de la figure 1,
- la figure 3, une vue en coupe du module de la figure 2,
- la figure 4, une vue de dessus du module électronique des figures 2 et 3,
- la figure 5, une vue en coupe d'une carte à puce sans contact selon un deuxième mode de réalisation de l'invention, au cours de sa fabrication.

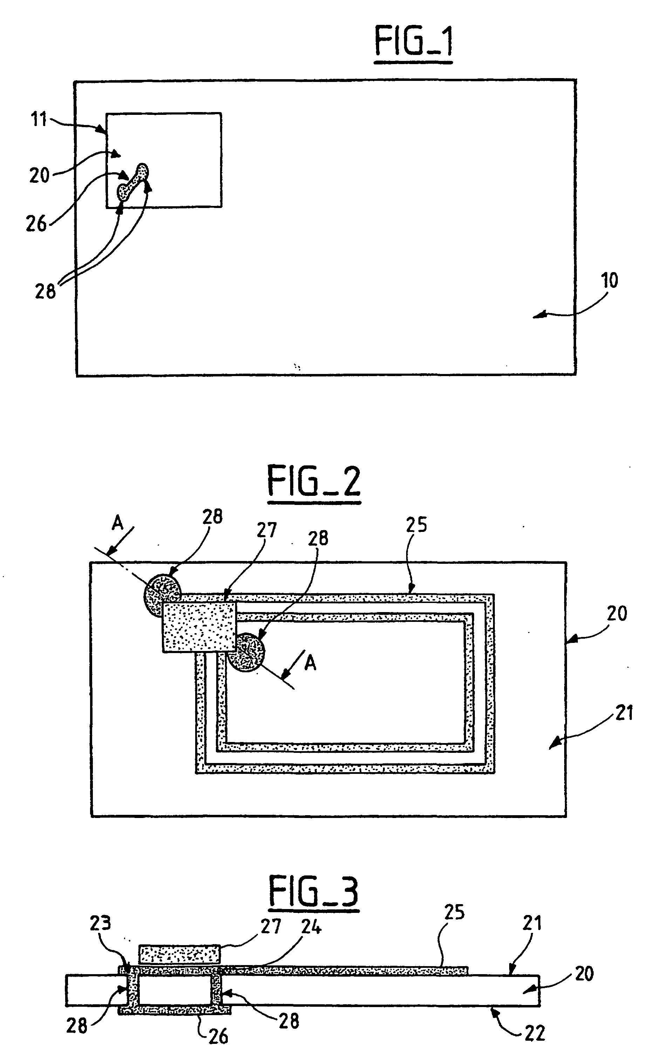

Les figures 1 à 4 représentent différentes vues des éléments de constitution d'une carte à puce sans contact 10 selon un premier mode de réalisation de l'invention. Cette carte à puce 10 comporte un corps de carte qui est généralement réalisé en matière plastique par injection ou lamination par exemple. Elle comporte d'autre part des moyens d'inhibition qui permettent d'empêcher son utilisation tant qu'ils n'ont pas été désactivés. Plus particulièrement, cette carte 10 comporte une jonction 26 qui affleure sa surface. Cette jonction 26 est réalisée à base d'une substance électriquement conductrice, par exemple par sérigraphie d'encre conductrice, et elle relie les bornes de connexion d'une antenne, non visible sur cette figure 1, par l'intermédiaire de vias conducteurs 28. Ainsi, cette jonction 26, affleurant la surface de la carte 10, permet de court-circuiter les bornes de l'antenne. Dans cet état, la carte 10 est donc inutilisable. cette jonction permet donc de détecter si la carte a déjà été utilisée.

Lorsqu'un utilisateur veut mettre la carte en service, soit dès qu'il l'achète, soit au moment de la première utilisation, il lui faut donc supprimer cette jonction 26. Pour cela, il lui suffit de gratter sur la jonction car la substance électriquement conductrice utilisée est formulée de telle sorte qu'elle présente de faibles propriétés d'adhérence sur le substrat. Cette substance conductrice est par exemple une encre réalisée à base d'époxy chargé en particules d'argent ou alors en carbone.

La rupture de cette jonction 26 permet de supprimer le court-circuit de l'antenne si bien que la communication à distance entre la carte et un lecteur est rendue possible.

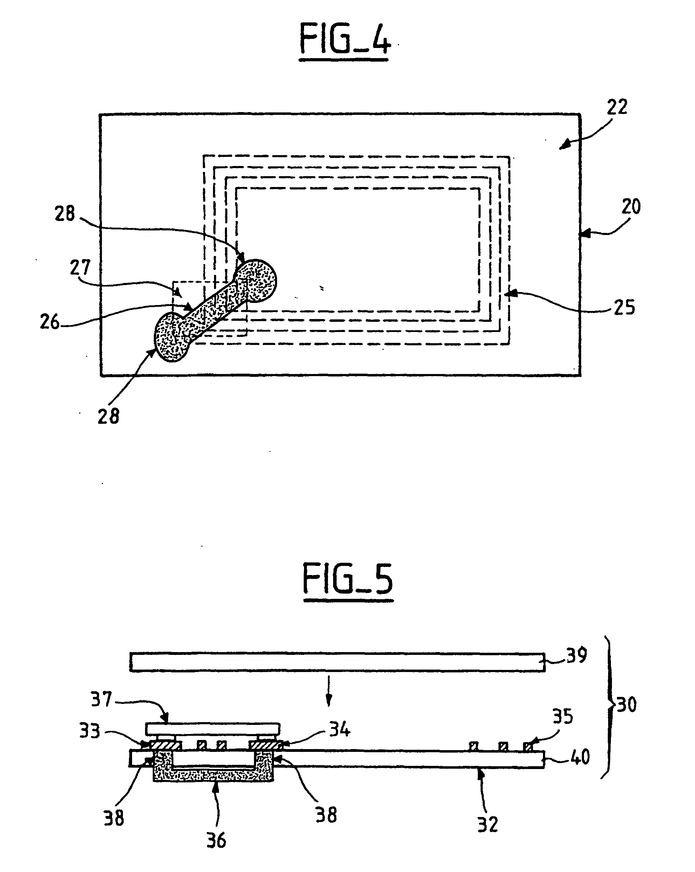

Selon ce premier mode de réalisation, la carte 10 est munie d'une cavité 11 dans laquelle est inséré un module électronique 20. Ce module électronique 20 est schématisé sur les figures 2 à 4 respectivement en vue de dessous, en coupe et en vue de dessus. Il comporte deux faces 21 et 22. Un première face 21 supporte une antenne 25 ainsi qu'une puce en circuit intégré 27 connectée aux bornes de connexions de l'antenne. Cette première face 21 est destinée à être logée dans le fond de la cavité 11 du corps de carte 10. La figure 2 représente une vue de dessous du module 20, c'est à dire une vue de cette première face 21 du module 20 destinée à être logée dans le fond de la cavité du corps de carte 10. La figure 4, quant à elle, représente une vue de dessus du module, c'est à dire une vue de la deuxième face 22 du module 20 destinée à affleurer la surface du corps de carte 10. Cependant, sur cette figure 4, l'antenne 25 et la puce 27 ont été représentée en traits pointillés.

L'antenne 25 peut être réalisée par impression d'encre conductrice en utilisant un procédé classique d'impression par tampographie ou alors d'impression offset par exemple. Cette antenne 25 est, de manière classique, réalisée sous la forme d'un conducteur continu qui s'enroule selon une spirale rectangulaire présentant un certain nombre de spires disposées concentriquement et s'étendant dans le plan de la première face 21 du module électronique 20. Les deux extrémités du conducteur d'antenne 25 forment respectivement une borne externe 23 et une borne interne 24 par lesquelles l'antenne est raccordée à deux plots de contact d'une puce en circuit intégré 27. Cette puce 27 est reportée sur l'antenne selon un montage classique et bien connu, tel qu'un montage de type "flip chip" par exemple ou autre.

Deux orifices 28 sont pratiqués dans l'épaisseur du module 20, en regard des bornes de connexion 23, 24 de l'antenne. Ils sont réalisés de manière à aboutir sur la deuxième face 22 du module électronique 20. Ces orifices sont métallisés, par un procédé de sérigraphie d'encre conductrice, de manière à obtenir des vias conducteurs 28 électriquement reliés aux bornes de connexion 23, 24 de l'antenne 25. Cette étape de sérigraphie d'encre conductrice permet également de réaliser la jonction 26, affleurant la deuxième face 22 du module et reliant les deux vias conducteurs 28. Ainsi, les vias conducteurs 28 et la jonction 26 peuvent être formés simultanément. Cette jonction 26 permet de raccorder les deux bornes de connexion 23, 24 de l'antenne 25 par l'intermédiaire des vias conducteurs 28 et de créer ainsi un court-circuit rendant la carte inutilisable.

Dans l'exemple qui vient d'être décrit, l'antenne 25 était décrite comme un enroulement d'un conducteur continu dont les extrémités forment respectivement une borne interne et une borne externe. Dans une variante de réalisation, on pourra former l'antenne autrement. Ce pourra être un enroulement possédant par exemple deux bornes externes ou deux bornes internes. Dans ce cas, les spires de l'enroulement de chevauchent et pour éviter qu'elles se court-circuitent, on prend soin, lors de la fabrication de l'antenne, de séparer les spires qui se chevauchent par une pastille isolante.

Une autre carte à puce sans contact, selon un deuxième mode de réalisation de l'invention, est schématisée, au cours de sa fabrication, sur la vue en coupe de la figure 5. Selon ce deuxième mode de réalisation, la carte à puce, référencée 30, ne comporte pas de cavité ni de module électronique.

Dans ce cas en effet, le corps de carte 30 comporte au moins deux feuilles de matière plastique 39, 40 aux dimensions (largeur, longueur) de la carte à réaliser. Une antenne 35 est imprimée sur une première feuille 40 par une technique d'impression bien connue du type impression offset ou tampographie par exemple. Cette antenne 35 se présente sous la forme d'un conducteur continu qui s'enroule selon une spirale rectangulaire présentant un certain nombre de spires disposées concentriquement et qui s'étend dans tout le plan de la feuille 40 constituant le corps de carte 30. Les extrémités 33, 34 du conducteur d'antenne 35 forment des bornes de connexion auxquelles sont connectés deux plots de contact d'une puce en circuit intégré 37.

Deux orifices sont pratiqués dans l'épaisseur du corps de carte, en regard des bornes de connexion 33, 34 de l'antenne 35, de telle sorte qu'ils débouchent sur une face 32 extérieure du corps de carte 30. Ces orifices sont ensuite métallisés par un procédé de dépôt par impression, par exemple par sérigraphie d'encre conductrice, en vue de réaliser des vias conducteurs 38. Ce procédé de sérigraphie permet, dans une même étape, de réaliser une jonction 36 à la surface de la face extérieure 32 du corps de carte, afin de relier les bornes de connexion 33, 34 de l'antenne 35 par l'intermédiaire des vias conducteurs 38.

Une deuxième feuille 39, qui peut éventuellement être transparente, est ensuite reportée sur la feuille 40 pour protéger l'antenne 35 et la puce en circuit intégré 37 et les noyer dans le corps de carte 30. Cette deuxième feuille 39 est reportée par un procédé classique et bien connu, par exemple par un procédé de lamination.

Ainsi, la carte à puce 30 présente une face supérieure 32 supportant une jonction 36 permettant d'inhiber son fonctionnement en court-circuitant l'antenne par l'intermédiaire de vias conducteurs 38. Grâce à la présence de cette jonction, l'utilisateur sait que la carte n'a pas encore été utilisée et que le nombre d'unités de valeur en mémoire est donc maximum.

Pour pouvoir activer la carte, il suffit à l'utilisateur de gratter cette jonction 26 afin de la détruire et ainsi de supprimer le court-circuit. L'encre conductrice est formulée de telle sorte qu'elle présente de faibles propriétés d'adhérence sur la surface du corps de carte. Elle est par exemple fabriquée à base d'époxy chargé en particules d'argent ou en carbone.

## Revendications

1. Carte à puce sans contact (10; 30) comprenant un corps de carte, une antenne (25; 35) avec des bornes de connexion (23, 24; 33, 34) ; une puce de circuit intégré (27; 37) étant connectée aux bornes de connexion (23, 24; 33, 34) ; une jonction (26; 36) à base d'une substance électriquement conductrice, destinée à être enlevée par grattage lors de la première utilisation de la carte, affleure une surface (22; 32) de la carte ;
**Caractérisée en ce que** l'antenne (25; 35) est formée sur une première face ou feuille (21 ; 40) ; les bornes de connexion (23, 24; 33, 34) sont reliées à des vias conducteurs (28; 38) dans des orifices pratiqués en épaisseur au regard des bornes de connexion (23, 24; 33, 34) de manière à aboutir à une deuxième face (22; 32) ; la jonction (26; 36) à enlever par grattage reliant les vias conducteurs (28; 38) sur la deuxième face (22; 32).

2. Carte selon la revendication 1, **caractérisée en ce qu'**elle comporte en outre un module électronique (20) double face logé dans une cavité (11) pratiquée dans le corps de carte (10), l'antenne (25) et la puce (27) étant supportées par une première face (21) du module (20), les vias conducteurs (28) étant pratiqués dans l'épaisseur du module (20) ; la deuxième face (22) affleurant la surface de la carte (10).

3. Carte selon la revendication 1, **caractérisée en ce que** l'antenne (35) s'étend dans tout le plan du corps de carte (30), **en ce que** l'antenne (35) et la puce (37) sont noyées dans le corps (30) ; les vias conducteurs (38) sont pratiqués dans l'épaisseur du corps de carte et débouchent (38) à sa surface extérieure (32).

## Patentansprüche

1. Kontaktlose Chipkarte (10; 30) mit einem Kartenkörper, einer Antenne (25; 35) mit Anschlussklemmen (23, 24; 33, 34); wobei ein IC-Chip (27; 37) an die Anschlussklemmen (23, 24; 33, 34) angeschlossen ist; wobei eine Verbindung (26; 36) auf der Basis einer elektrisch leitenden Substanz, die bei der ersten Benutzung der Karte durch Abkratzen entfernt werden soll, bündig mit einer Oberfläche (22; 32) der Karte abschließt;
**dadurch gekennzeichnet, dass** die Antenne (25; 35) an einer ersten Fläche oder Folie (21; 40) ausgebildet ist; dass die Anschlussklemmen (23, 24; 33, 34) mit leitenden Brücken (28; 38) in Öffnungen verbunden sind, die in der Dicke gegenüber den Anschlussklemmen (23, 24; 33, 34) derart vorgesehen sind, dass sie in eine zweiten Fläche (22; 32) münden; wobei die durch Abkratzen zu entfernende Verbindung (26; 36) die leitenden Brücken (28; 38) an der zweiten Fläche (22; 32) verbindet.

2. Karte nach Anspruch 1, **dadurch gekennzeichnet, dass** sie ferner ein doppelseitiges elektronische Modul (20) aufweist, das in einer in dem Kartenkörper (10) vorgesehenen Vertiefung (11) gelagert ist, wobei die Antenne (25) und der Chip (27) von einer ersten Fläche (21) des Moduls (20) getragen werden, wobei die leitenden Brücken (28) in der Dicke des Moduls (20) vorgesehen sind; wobei die zweite Fläche (22) bündig mit der Oberfläche der Karte (10) abschließt.

3. Karte nach Anspruch 1, **dadurch gekennzeichnet, dass** sich die Antenne (35) in der gesamten Ebene des Kartenkörpers (30) erstreckt, dass die Antenne (35) und der Chip (37) in dem Körper (30) eingebettet sind; wobei die leitenden Brücken (38) in der Dicke des Kartenkörpers vorgesehen sind und an seiner Außenfläche (32) münden.

## Claims

1. A contactless chip card (10; 30) comprising a card body, an antenna (25; 35) with connection terminals (23, 24; 33, 34); an integrated circuit chip (27; 37) being connected to the connection terminals (23, 24; 33, 34); a junction (26; 36) based on electrically conductive substances, intended to be removed by scratching when the card is first used, lies flush with the surface (22; 32) of the card;
**characterised in that** the antenna (25; 35) is formed on a first face or sheet (21; 40); the connection terminals (23, 24; 33, 34) are connected to conductive vias (28; 38) in orifices formed in the thickness opposite the connection terminals (23, 24; 33, 34) so as to end at a second face (22; 32); the junction (26; 36) to be removed by scratching connecting the conductive vias (28; 38) to the second face (22; 32).

2. A card according to Claim 1, **characterised in that** it also comprises a dual-face electronic module (20) housed in a cavity (11) formed in the card body (10), the antenna (25) and the chip (27) being supported by a first face (21) of the module (20), the conductive vias (28) being formed in the thickness of the module (20); the second face (22) lying flush with the surface of the card (10).

3. A card according to Claim 1, **characterised in that** the antenna (35) lies in the entire plane of the card body (30), and **in that** the antenna (35) and the chip (37) are embedded in the body (30); the conductive vias (38) are formed in the thickness of the card body and open out (38) at its external surface (32).
